# DEMANDE DE BREVET EUROPEEN

(11) **EP 3 185 622 A1**
(43) Date de publication de la demande: **28.06.2017**
(21) Numéro de dépôt: 16205819.2
(22) Date de dépôt: 21.12.2016
(51) Int. Cl.: H04W 52/02

(54) **PROCÉDÉ ET SYSTÈME DE CONTRÔLE DE COMMUNICATION DANS UNE INFRASTRUCTURE ÉLECTRIQUE**

(30) Priorité: 24.12.2015 FR 1563296
(71) Demandeur: Schneider Electric Industries SAS, 92500 Rueil-Malmaison (FR)
(72) Inventeur: MESSAGE THEBAUDEAU, Laetitia, 38050 GRENOBLE CEDEX 9 (FR); BERTON, Julien, 38050 GRENOBLE CEDEX 9 (FR); LANSOY, Mathieu, 38050 GRENOBLE CEDEX 9 (FR); VERNEAU, Guillaume, 38050 GRENOBLE CEDEX 9 (FR)
(74) Mandataire: Brevalex

(57) **Abrégé**

La présente invention concerne un procédé et un système de contrôle de consommation énergétique de communications entre modules électriques d'une infrastructure électrique, comportant :
- un réseau de communication (7 ;107) étoilé entre un module central dit module maître (30 ; 130), et un ensemble de modules esclaves (31-34 ; 131-135), le module maître étant configuré pour être relié aux modules esclaves par des liens de communication non filaire en mode étoilé,
- circuit de traitement (9, 109) configuré pour régler des niveaux d'énergie de liens de communications au moins dans un sens de réception par le module maître à partir d'au moins un module esclave ou par au moins un module esclave depuis le module maître.

## Description

### DOMAINE TECHNIQUE

La présente invention concerne la communication sans fil entre modules d'une infrastructure électrique telle qu'une sous-station d'un réseau de distribution électrique et plus particulièrement, le contrôle de la consommation énergétique des communications entre les modules.

### ÉTAT DE LA TECHNIQUE ANTÉRIEURE

Dans le passé, les sous-stations d'un réseau de distribution électrique ne présentaient que de faibles possibilités en termes de capacités de communication. Généralement, ces communications étaient réalisées par des liaisons filaires. Ceci nécessite de nombreuses et longues connexions filaires, ce qui est préjudiciable en termes d'encombrement et de coûts. En outre, il est difficile à mettre en oeuvre un éventuel réaménagement d'une architecture de communication à liaison filaire.

De plus, les communications filaires étaient limitées à des fonctionnalités prioritaires relatives à la sûreté du réseau et à la sécurité des biens et des personnes.

Actuellement, de plus en plus de sous-stations sont dotées des moyens de communication sans fil qui ne présentent donc pas les inconvénients précités.

Néanmoins, il s'avère que les communications sans fil sont exploitées sans considération des aspects énergétiques et généralement fonctionnent en pleine puissance. De fait, la consommation énergétique de communications dans une sous-station est non négligeable et non maîtrisée. Cela peut devenir critique et induire des problèmes dans le cas d'une interruption de production électrique (blackout) plus ou moins longue où l'ensemble des équipements doit fonctionner sur des alimentations de secours telles que des piles, batteries, ou super-capacités.

De plus, une mauvaise définition de la gestion des priorités entre communications sans fil et fonctionnalités de la sous-station peut éventuellement perturber les opérations de certains éléments comme par exemple des interrupteurs ou des disjoncteurs à réarmement automatique au sein de la sous-station.

L'objet de la présente invention est par conséquent de proposer un procédé et un système de contrôle de communication sans fil qui permet de connecter de manière sûre un grand nombre d'équipements tout en maîtrisant la consommation énergétique des communications et sans présenter les inconvénients précités.

### EXPOSÉ DE L'INVENTION

L'invention propose un procédé de contrôle de consommation énergétique de communications entre des noeuds d'un réseau de communication intra-sous-station ou inter-sous-stations d'une infrastructure électrique, les noeuds d'un réseau de communication intra-sous-station étant formés par des équipements électriques à l'intérieur de la sous-station, les noeuds d'un réseau de communication inter-sous-stations étant formés par les sous-stations elles-mêmes, un noeud appartenant à un réseau de communication intra-sous-station ou à un réseau de communication inter-sous-stations étant appelé module électrique, ledit procédé comportant les étapes suivantes :
- définir un réseau de communication étoilé en partitionnant les modules électriques entre un module central dit module maître, et un ensemble de modules esclaves, le module maître étant configuré pour être relié aux modules esclaves par des liens de communications non filaires en mode étoilé, et
- réglage des niveaux d'énergie de liens de communications au moins dans un sens de réception par le module maître à partir d'au moins un module esclave ou par au moins un module esclave depuis le module maître, ledit réglage des niveaux d'énergie étant réalisé selon un processus générique modélisant les liens de communications.

Avantageusement, le procédé comporte le réglage des niveaux d'énergie de liens de communications au moins dans le sens de réception par le module maître à partir de chaque module esclave ou par chaque module esclave depuis le module maître.

Ceci permet de maîtriser la consommation énergétique au moins dans le sens de réception par le module maître et/ou par chaque module esclave.

Avantageusement, le procédé comporte en outre un réglage des niveaux d'énergie des liens de communications dans un sens de transmission du module maître vers au moins un module esclave ou d'au moins un module esclave vers le module maître.

Avantageusement, le procédé comporte en outre un réglage des niveaux d'énergie des liens de communications dans un sens de transmission du module maître vers chaque module esclave ou de chaque module esclave vers le module maître.

Ainsi, on optimise davantage la consommation en modulant l'énergie dédiée à la fois à la réception et à la transmission et en plus relativement à chaque module électrique (maître ou esclave).

Avantageusement, le procédé comporte les étapes suivantes :
- réglage des niveaux d'énergie dans le sens de transmission du module maître vers chaque module esclave,
- réglage des niveaux d'énergie dans le sens de réception du module maître à partir de chaque module esclave,
- réglage des niveaux d'énergie dans le sens de transmission de chaque module esclave vers le module maître, et
- réglage des niveaux d'énergie dans le sens de réception de chaque module esclave à partir du module maître.

Ainsi, toutes les communications entre le module maître et les modules esclaves dans les deux sens de communication (transmission et réception) sont prises en compte de façon à établir le niveau de consommation nécessaire et suffisant de manière individualisée pour chaque lien de communication.

Avantageusement, le procédé comporte une modélisation des liens de communication par des triplets ordonnés constitués chacun d'un premier composant indiquant le sens du lien de communication, et de deuxième et troisième composants indiquant les extrémités de départ et d'arrivée du lien de communication dans l'ordre ou dans l'ordre inversé selon que le sens de communication attribué par le premier composant est respectivement une transmission ou une réception. Ceci revient à affecter au premier composant le sens de communication (transmission ou réception), au deuxième composant le module qui est le sujet du verbe de ladite communication, et au troisième composant le module qui est complément d'objet du verbe de ladite communication.

Ceci facilite la mise en oeuvre d'un algorithme générique de réglage d'énergie en fonction seulement de trois paramètres (i.e. trois composantes du triplet ordonné).

Avantageusement, le réglage du niveau d'énergie d'un lien de communication générique identifié par un premier triplet ayant pour composants un premier sens du lien de communication, un premier module électrique, et un deuxième module électrique, est réalisé selon un processus générique comportant les étapes suivantes :
- définir un deuxième triplet ayant pour premier composant un deuxième sens du lien de communication opposé audit premier sens, pour deuxième composant ledit deuxième module électrique, et pour troisième composant ledit premier module électrique,
- tester de manière itérative un état de fonctionnement du lien de communication en fonction des première et deuxième valeurs courantes de réglage de niveaux d'énergie relatives respectivement auxdits premier et deuxième triplets en décrémentant à chaque itération un compteur associé à la valeur courante de réglage relative au premier triplet, ledit compteur étant initialisé à une valeur maximale du niveau d'énergie,
- sauvegarder des première et deuxième valeurs courantes de réglage de niveaux d'énergie fonctionnelles,
- sauvegarder un ensemble de couples de réglages (j, k) fonctionnels relatif au premier triplet (SENS, A, B), chaque couple courant *de réglage* fonctionnel étant composé desdites première et deuxième valeurs courantes de réglage de niveaux d'énergie fonctionnelles.

Ainsi, un même algorithme générique est utilisé pour régler à la fois la transmission et la réception et en plus pour chaque module électrique qu'il soit maître ou esclave. Ceci simplifie considérablement le développement de l'algorithme et permet d'ajouter de manière simple et rapide de nouvelles fonctions.

Avantageusement, le procédé comporte une sauvegarde d'une configuration de consommation énergétique selon une stratégie visant à optimiser la consommation énergétique du premier module ou du deuxième module ou le moins énergivore desdits premier et deuxième modules.

Avantageusement, le procédé comporte une analyse de défaillance d'une communication lors d'un échec de fonctionnement du lien de communication.

Avantageusement, le procédé comporte un réglage en mode diffusion (*broadcast* en anglais) comportant l'étape de sélectionner parmi des couples fonctionnels associés aux liens de communication, le maximum du niveau de transmission du module maître vers chacun des modules esclaves, ainsi que le niveau maximum de réception du module maître depuis chacun des modules esclaves.

Avantageusement, le contrôle de consommation énergétique selon l'invention dudit module maître et desdits modules esclaves est mis en oeuvre après un événement prédéterminé ou lors d'une situation critique.

Ainsi, la minimisation de la consommation énergétique de communication peut se dérouler après un événement prédéterminé (par exemple l'installation initiale, ou la mise sous tension), ou lors d'une situation critique (par exemple, un défaut de communication, un pic de consommation électrique, ou blackout). Ceci permet de gérer les situations critiques (pic de consommation, panne, ou interruption du réseau de distribution électrique) selon un ordre de priorité. Par exemple, en cas de panne ou de pic de consommation, il faut dédier en priorité une partie de l'énergie disponible au bon fonctionnement de l'installation électrique en baissant les niveaux de communication au plus faible afin d'économiser l'énergie. Ceci permet également de gérer les évènements qui peuvent perturber les opérations au sein de la station en baissant les niveaux de communication au minimum lors par exemple d'un passage d'ordre sur un interrupteur afin d'éviter tout risque ou perturbation.

L'invention vise également un système de contrôle de consommation énergétique de communications entre des noeuds d'un réseau de communication intra-sous-station ou inter-sous-stations d'une infrastructure électrique, les noeuds d'un réseau de communication intra-sous-station étant formés par des équipements électriques à l'intérieur de la sous-station, les noeuds d'un réseau de communication inter-sous-stations étant formés par les sous-stations elles-mêmes, un noeud appartenant à un réseau de communication intra-sous-station ou à un réseau de communication inter-sous-stations étant appelé module électrique, ledit système comportant :
- un réseau de communication étoilé entre un module central dit module maître, et un ensemble de modules esclaves, le module maître étant configuré pour être relié aux modules esclaves par des liens de communication non filaire en mode étoilé, et
- un circuit de traitement configuré pour mettre en oeuvre le procédé selon les caractéristiques ci-dessus.

Selon un mode de réalisation de l'invention, le réseau de communication étoilé est un réseau interne formé par des équipements au sein d'une même sous-station parmi lesquels un équipement central est configuré pour jouer le rôle du module maître tandis que les autres équipements sont configurés pour jouer les rôles des modules esclaves.

Ceci permet à plusieurs équipements d'une même sous-station d'échanger des données pour le bon fonctionnement et la sécurité de la sous-station.

Selon un mode de réalisation de l'invention, le réseau de communication étoilé est un réseau externe formé par un ensemble de sous-stations électriques parmi lesquelles une sous-station centrale, dite centre de conduite, configurée pour jouer le rôle du module maître tandis que les autres sous-stations sont configurées pour jouer les rôles des modules esclaves.

L'invention vise aussi une infrastructure électrique (Sous-station ou réseau de distribution électrique) comportant le système ou mettant en oeuvre le procédé selon l'une quelconque des caractéristiques ci-dessus.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 représente de manière schématique un système de contrôle de la consommation énergétique de communications entre modules électriques d'une infrastructure électrique, selon un mode de réalisation préféré de l'invention ;
Les Figs. 2A-2E représentent de manière schématique les étapes globales d'un procédé de contrôle de la consommation énergétique de communications entre modules électriques d'une infrastructure électrique, selon un mode de réalisation préféré de l'invention ;
La Fig. 3 est un organigramme illustrant les étapes d'un processus générique de réglage du niveau d'énergie, selon un mode de réalisation préféré de l'invention ;
La Fig. 4 est un organigramme illustrant les étapes d'un sous-processus d'analyse de défaillance d'une communication, selon un mode de réalisation préféré de l'invention ;
La Fig. 5 est un organigramme illustrant les étapes d'un sous-processus d'analyse et d'actions à prendre selon la stratégie sélectionnée après l'échec d'une communication, selon un mode de réalisation préféré de l'invention ;
La Fig. 6 est un organigramme illustrant les étapes d'un sous-processus de sauvegarde d'une configuration de consommation énergétique selon plusieurs stratégies, selon un mode de réalisation préféré de l'invention ;
La Fig. 7 est un organigramme illustrant les étapes d'un processus de contrôle de la consommation énergétique dans des situations critiques, selon un mode de réalisation préféré de l'invention ; et
La Fig. 8 représente de manière schématique les étapes globales d'un procédé de contrôle de la consommation énergétique de communications entre modules électriques en mode de diffusion, selon un autre mode de réalisation préféré de l'invention.

### EXPOSÉ DÉTAILLÉ DE MODES DE RÉALISATION PARTICULIERS

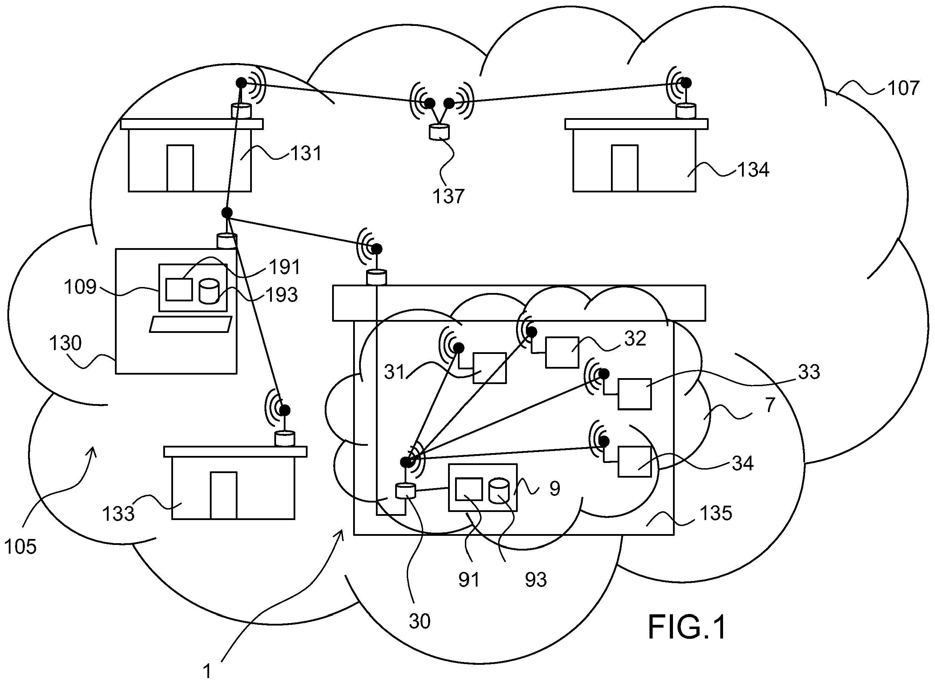

La Fig. 1 représente de manière schématique un système 1 de contrôle de la consommation énergétique de communications entre modules électriques 30-34,130-137 d'une infrastructure électrique, selon un mode de réalisation de l'invention.

Conformément à l'invention, le système 1 de contrôle comporte un réseau de communication 7, 107 et un circuit de traitement 9, 109 configuré pour régler la consommation énergétique de communication dans l'infrastructure électrique.

Par infrastructure électrique, on entend une sous-station 135 électrique ou un ensemble 105 de sous-stations d'un réseau de production électrique.

La présente invention s'applique ainsi pour un réseau de communication 7 intra-sous-station (i.e. à l'intérieur d'une sous-station 135) et/ou pour un réseau de communication 107 inter-sous-stations (i.e. entre les sous-stations 130-135).

Ainsi, les noeuds d'un réseau de communication 7 intra-sous-station sont formés par des équipements électriques à l'intérieur de la sous-station 135 tandis que les noeuds d'un réseau de communication 107 inter-sous-stations sont formés par les sous-stations 130-135 elles-mêmes. Un noeud appartenant à un réseau de communication 7 intra-sous-station ou à un réseau de communication 107 inter-sous-stations est désigné dans la suite de manière invariante par module électrique 30-34 (ou 130-135).

Conformément au mode de réalisation de l'invention, le réseau de communication 7 (ou 107) est défini ou construit par une partition des modules électriques 30-34 (ou 130-135) entre un module central dit module maître 30 (ou 130), et un ensemble de modules esclaves 31-34 (ou 131-135). Le module maître 30 (ou 130) est configuré pour être relié aux modules esclaves 31-34 (ou 131-135) par des liens de communication non filaire en mode étoilé. Ainsi, une extrémité de chaque lien correspond au module maître 30 (ou 130) et l'autre extrémité correspond à un module esclave appartenant à l'ensemble de modules esclaves 31-34 (ou 131-135).

Ainsi, selon un mode de réalisation de l'invention, le réseau de communication étoilé est un réseau interne 7 formé par les équipements électriques au sein d'une même sous station 135. Un équipement central parmi les équipements électriques est configuré pour jouer le rôle du module maître 30 tandis que les autres équipements sont configurés pour jouer les rôles des modules esclaves 31-34. A titre d'exemple, la communication sans fil au sein de la sous-station 135 est avantageusement du type Wifi. En effet, une balise ou un routeur installé au sein de la sous-station 135 joue le rôle du module maître 30 et les différents équipements électriques sont dotés nativement ou par ajout (*add-on*) de sentinelles Wifi *(dongles)* pour jouer les rôles des modules esclaves 31-34.

Selon un autre mode de réalisation de l'invention, le réseau de communication étoilé est un réseau externe 107 formé par un ensemble de sous-stations électriques 130-135. Une sous-station centrale 130, dite centre de conduite, est configurée pour jouer le rôle du module maître 130 tandis que les autres sous-stations sont configurées pour jouer les rôles des modules esclaves 131-135. La communication sans fil entre les sous-stations 130-135 est avantageusement du type WiMax. En outre, le réseau de communication 107 inter-sous-stations comporte avantageusement des répétiteurs 137 entre les différentes sous-stations.

En particulier, un module maître 30 dans un réseau de communication interne 7 au sein d'une sous-station 135 peut être désigné pour jouer le rôle d'un module esclave dans le réseau externe 107 entre les différentes sous-stations 130-135. Dans ce cas, le module maître de chaque sous-station concentre toutes les données reçues des différents modules esclaves de la sous-station pour ensuite devenir lui-même un module esclave relativement au centre de conduite du réseau de communication externe 107.

Le circuit de traitement 9 (ou 109) dans un réseau de communication interne 7 ou externe 107, est associé au module maître 30 (ou 130) du réseau et peut être compris dans ce dernier. En particulier, le circuit de traitement 9 (ou 109) comporte de manière habituelle un processeur 91 (ou 191) et des moyens de stockage 93 (ou 193). Le circuit de traitement 9 (ou 109) est adapté pour exécuter un ou plusieurs programmes d'ordinateur comprenant des instructions de code de programme, stockés dans les moyens de stockage 93 (ou 193) et conçus pour mettre en oeuvre le procédé de la présente invention. En variante, le circuit de traitement 9 (ou 109) peut être un circuit logique installé dans le module maître.

Par souci de simplification, on désignera dans la suite le module maître par la référence *M*, les modules esclaves par les références *S1,...,Si,...,Sn,* le réseau de communication par la référence 7 et le circuit de traitement par la référence 9.

Selon un premier mode de réalisation de l'invention, le circuit de traitement 9 est configuré pour régler des niveaux d'énergie de liens de communications au moins dans un sens de réception par le module maître *M* à partir d'au moins un module esclave *Si* ou (ici le « ou » est non exclusif) par au moins un module esclave *Si* à partir du module maître *M*. De préférence, le circuit de traitement 9 est configuré pour régler les niveaux d'énergie de liens de communications au moins dans le sens de réception par le module maître *M* à partir de chaque module esclave *Si* ou (i.e. et/ou) par chaque module esclave *Si* à partir du module maître *M*.

Selon un deuxième mode de réalisation de l'invention, le circuit de traitement 9 est configuré pour régler les niveaux d'énergie des liens de communications dans un sens de transmission du module maître *M* vers au moins un module esclave *Si* ou (ici le « ou » est non exclusif) d'au moins un module esclave *Si* vers le module maître *M*. De préférence, le circuit de traitement 9 est configuré pour régler les niveaux d'énergie des liens de communications dans un sens de transmission du module maître *M* vers chaque module esclave *Si* ou (i.e. et/ou) de chaque module esclave *Si* vers le module maître *M*.

Par niveau d'énergie d'un lien de communication, on entend l'énergie électrique consommée lors d'une communication dans un sens de réception ou de transmission à travers le lien de communication. Avantageusement, la valeur du niveau d'énergie peut être définie en fonction de l'intensité de courant électrique débitée par le module électrique lors de la communication. En particulier, la valeur du niveau d'énergie peut être désignée par un ratio (entre 0 et 1) ou un pourcentage (entre 0% et 100%) de l'intensité électrique maximale débitée par un module électrique 30-35 fonctionnant en pleine puissance.

En outre, le réglage du niveau d'énergie d'un lien de communication dans un sens déterminé (réception ou transmission) signifie l'optimisation ou la minimisation de la consommation énergétique lors d'une communication dans le sens déterminé à travers ce lien.

Avantageusement, le circuit de traitement 9 est configuré pour régler les niveaux d'énergie des liens de communications dans un sens et/ou dans l'autre sens en mettant en oeuvre un algorithme générique modélisant les différents liens de communications.

En particulier, l'algorithme générique comporte une modélisation des liens de communications par des triplets ordonnés. Chaque triplet est constitué d'un premier composant, d'un deuxième composant et d'un troisième composant (disposés dans l'ordre désigné). Le premier composant indique le sens du lien de communication sélectionné parmi les sens de transmission *Tx* et de réception *Rx.* Les deuxième et troisième composants indiquent les extrémités de départ et d'arrivée du lien de communication dans l'ordre ou dans l'ordre inversé selon que le sens de communication attribué par le premier composant est respectivement une transmission Txou une réception *Rx.* Ainsi, si le premier composant indique un sens de transmission *Tx* alors, le deuxième composant indique l'extrémité de départ de la communication et le troisième composant indique l'extrémité d'arrivée de la communication. Autrement dit, si le premier composant indique un sens de transmission *Tx* alors, on donne en deuxième composant le module qui est le sujet du verbe de transmission, et en troisième composant le module qui est complément du verbe de transmission. Ainsi, une transmission *Tx* à travers un lien de communication depuis un premier module A vers un deuxième module *B* est notée par le triplet (*Tx, A, B*), c'est-à-dire «A transmet vers B».

En revanche, si le premier composant indique un sens de réception *Rx,* alors le deuxième composant indique l'extrémité d'arrivée de la communication et le troisième composant indique l'extrémité de départ de la communication. Autrement dit, si le premier composant indique un sens de réception *Rx* alors, on donne en deuxième composant le module qui est le sujet du verbe de réception, et en troisième composant le module qui est complément du verbe de réception. Dans ce cas, la réception *Rx* de la communication par le deuxième module *B* depuis le premier module A est notée par le triplet *(Rx, B, A*)), c'est-à-dire «B reçoit de A».

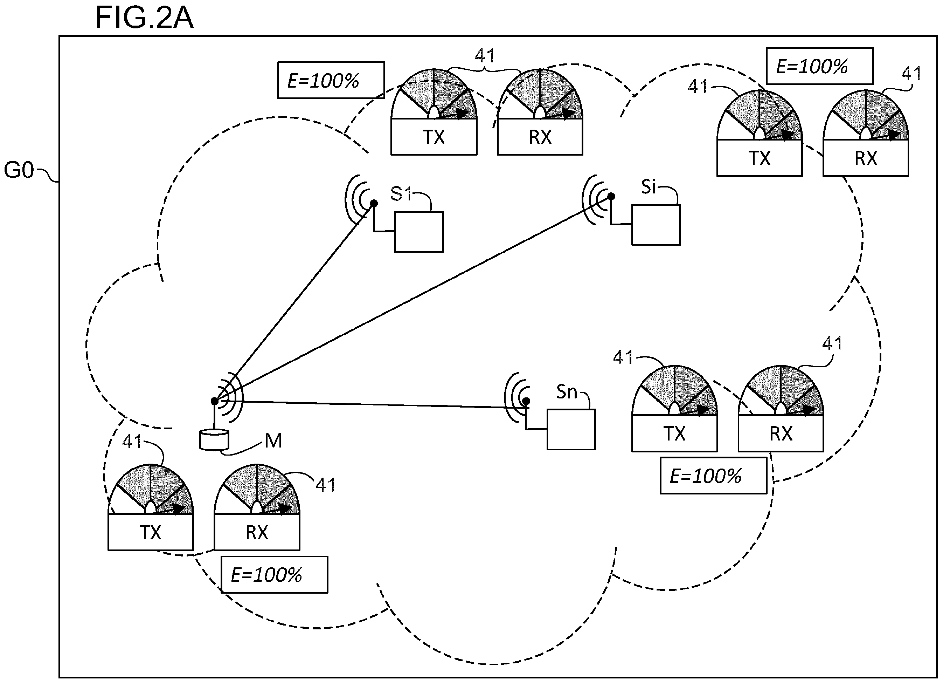

Les Figs. 2A-2E représentent les étapes globales d'un procédé de contrôle de la consommation énergétique de communications entre modules électriques d'une infrastructure électrique, selon un mode de réalisation préféré de l'invention.

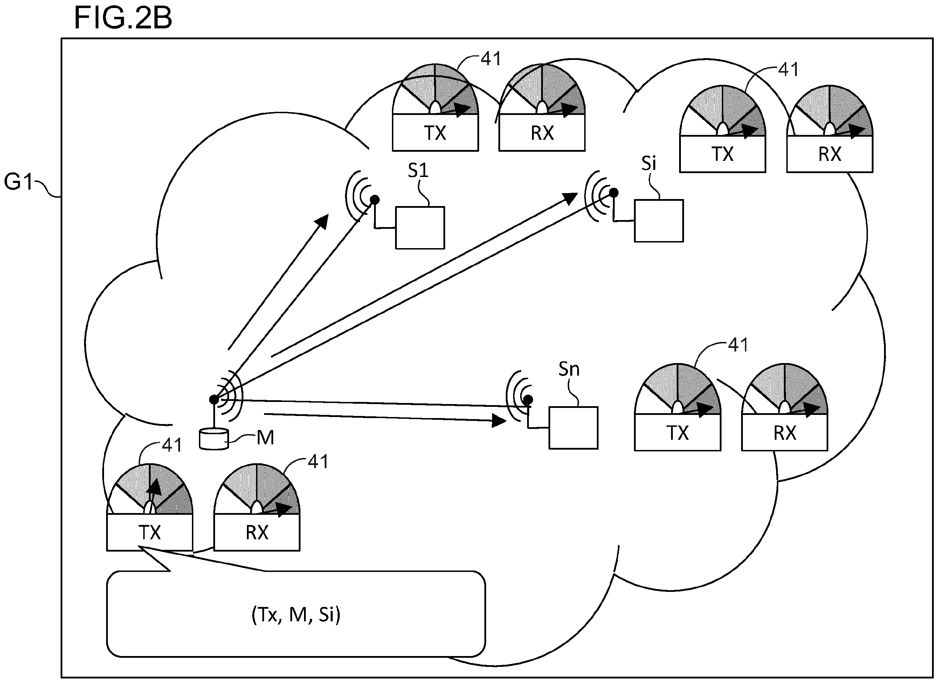

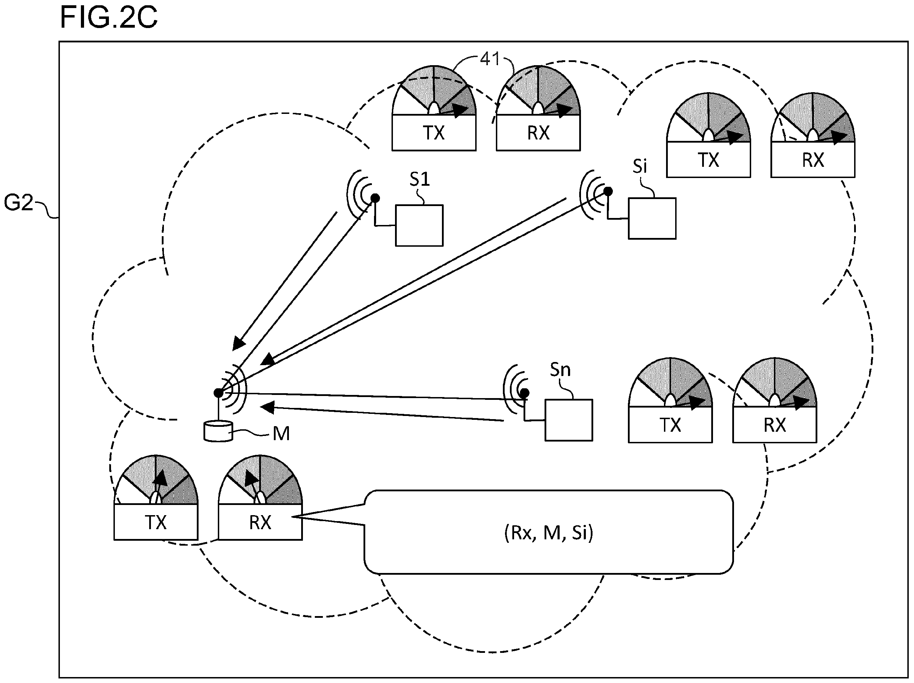

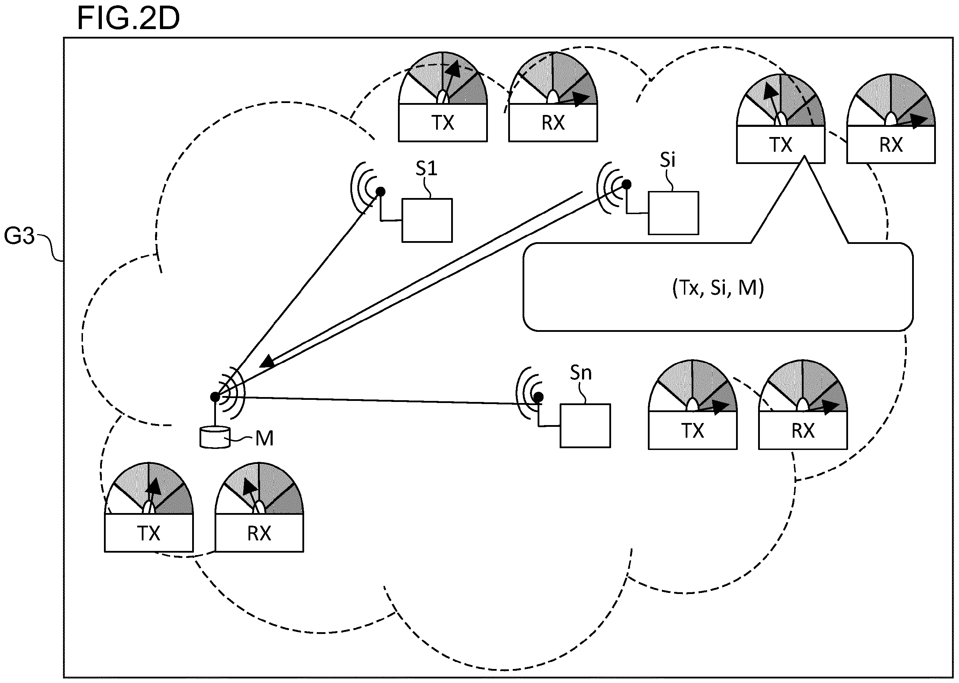

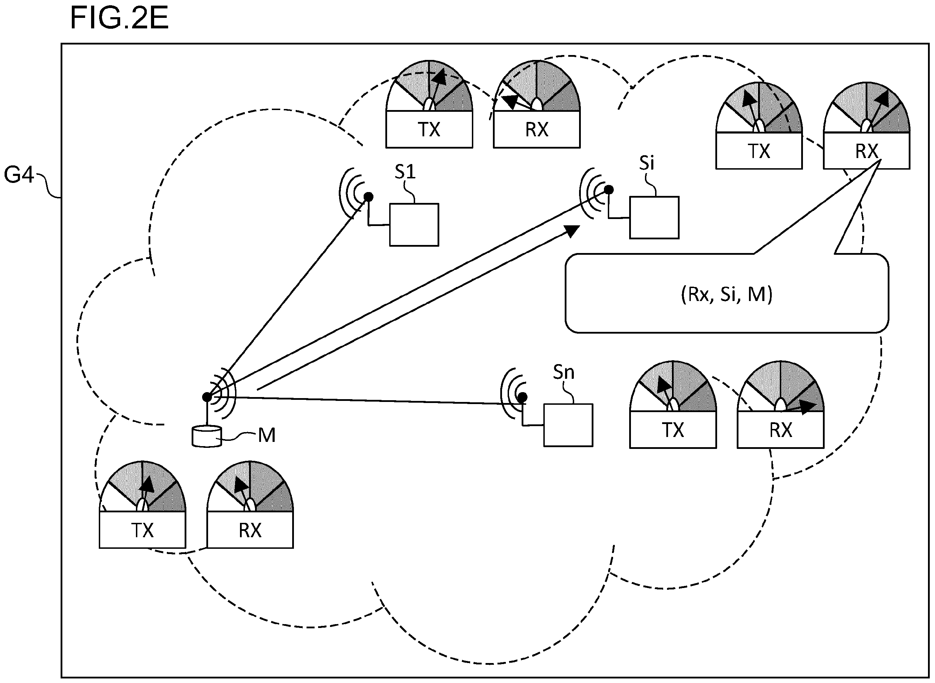

La Fig. 2A montre qu'au départ (étape G0), chaque module électrique (maître M ou esclave *S1,...,Si,...,Sn*) est à son niveau d'énergie *E* maximum (i.e. 100%) dans le sens de la transmission *Tx* et la réception *Rx.* Les niveaux d'énergies des modules électriques sont symbolisés sur la Fig. 2 par des jauges respectives. Bien entendu, on suppose que les communications sont fonctionnelles dans les deux sens *Tx* et *Rx* entre le module maître *M* et chaque module esclave *Si* lorsque celles-ci sont à leur niveau d'énergie maximal.

La première étape G1 (Fig. 2B) concerne le réglage du niveau d'énergie de chaque lien de communication identifié par un triplet (*Tx, M, Si*) ayant pour composants : le sens de transmission *Tx,* le module maître *M*, et un module esclave *Si* parmi les modules esclaves *S1 à Sn.* Autrement dit, cette première étape concerne l'optimisation de la consommation énergétique lors d'une communication dans le sens de transmission du module maître *M* vers chaque module esclave *Si.* L'étape de réglage est bien entendu, répétée pour chaque module esclave.

La deuxième étape G2 (Fig. 2C) concerne le réglage du niveau d'énergie de chaque lien de communication identifié par un triplet (*Rx, M, Si*) ayant pour composants: le sens de réception *Rx,* le module maître *M*, et un module esclave *Si.* Cette deuxième étape concerne ainsi le réglage des niveaux d'énergie dans le sens de réception du module maître M à partir de chaque module esclave *Si.*

La troisième étape G3 (Fig. 2D) concerne le réglage du niveau d'énergie de chaque lien de communication identifié par un triplet (*Tx, Si, M*) ayant pour composants : le sens de transmission *Tx,* un module esclave *Si,* et le module maître *M*. Cette troisième étape concerne ainsi le réglage des niveaux d'énergie dans le sens de transmission de chaque module esclave *Si* vers le module maître *M*.

Finalement, la quatrième étape G4 (Fig. 2E) concerne le réglage du niveau d'énergie de chaque lien de communication identifié par un triplet (*Rx, Si, M*) ayant pour composants : le sens de réception *Rx,* un module esclave *Si,* et le module maître *M*. Cette quatrième étape concerne ainsi le réglage des niveaux d'énergie dans le sens de réception de chaque module esclave *Si* depuis le module maître *M*.

On notera que l'ordre de séquencement des quatre étapes peut différer de celui illustré en Figs. 2A-2E.

Ce procédé permet de minimiser la consommation énergétique de communication dans l'infrastructure électrique dans son ensemble et peut se dérouler à différents moments comme par exemple, après l'installation initiale, ou après une première mise ou une remise sous tension, et peut être mis en oeuvre après un défaut électrique de type court-circuit sur le réseau de distribution, ou sur requête comme lors d'un pic de consommation électrique.

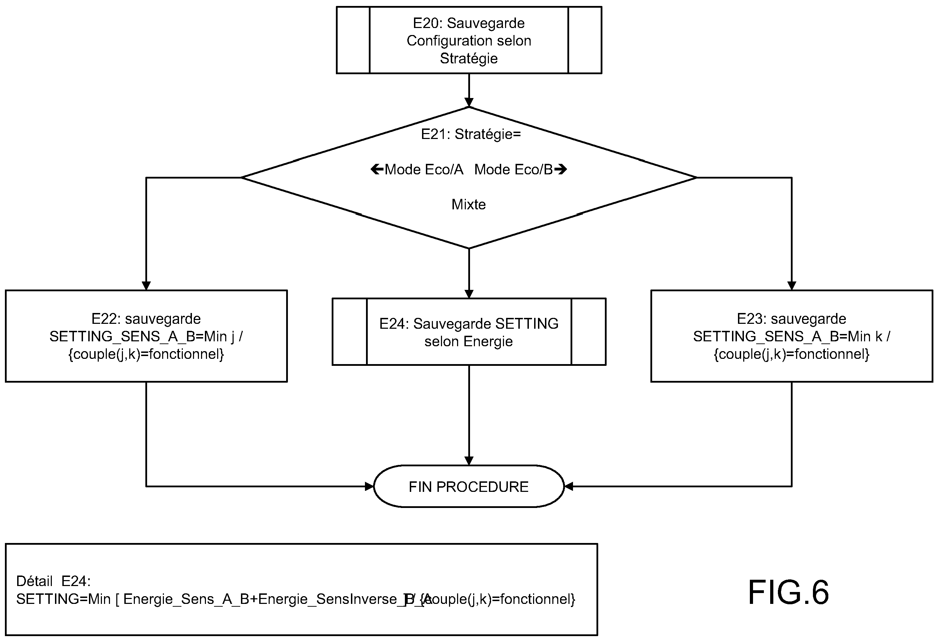

Par ailleurs, on notera que l'optimisation de la consommation énergétique peut être configurée selon différentes stratégies possibles. Par exemple, on peut sélectionner une première stratégie qui vise à optimiser le module maître ou une deuxième stratégie qui vise à optimiser les modules esclaves ou même une troisième stratégie qui vise à favoriser les modules les moins énergivores (voir Fig. 6).

Avantageusement, chacune des quatre étapes G1-G4 fait appel à un même processus générique de réglage du niveau d'énergie en fonction des triplets modélisant les différents liens de communication.

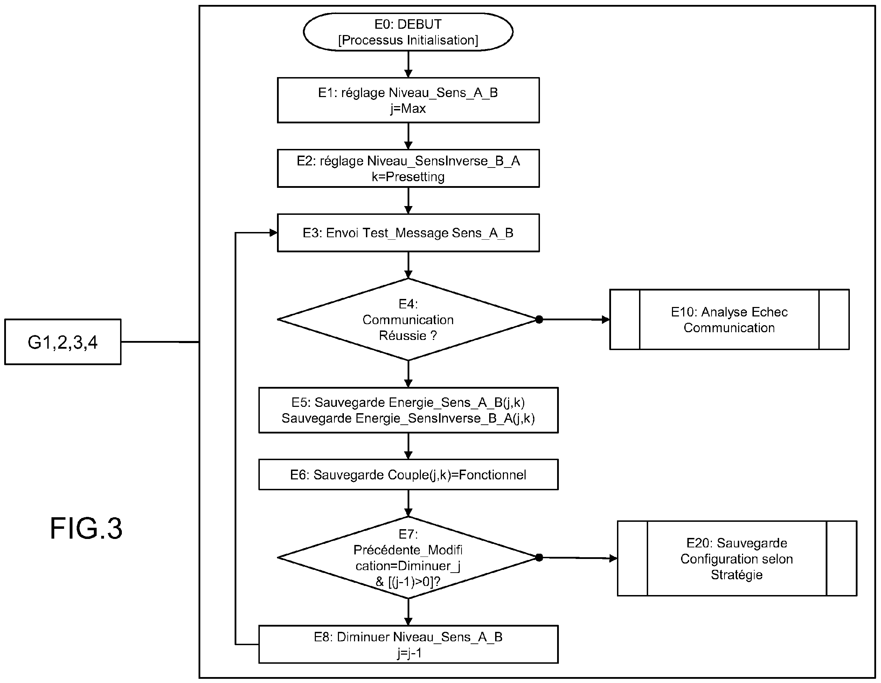

En effet, la Fig. 3 est un organigramme illustrant les étapes d'un processus générique de réglage du niveau d'énergie, selon un mode de réalisation préféré de l'invention.

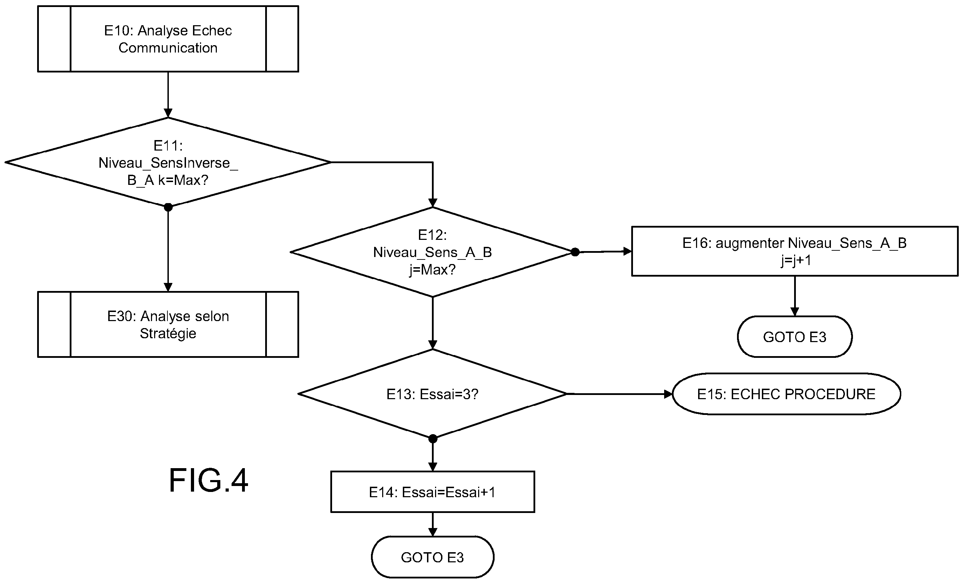

Le circuit de traitement 9 est configuré pour réaliser les différentes étapes du processus générique de la Fig. 3 ainsi que les étapes des sous-processus qui découlent de ce processus générique et qui sont décrits par les Figs. 4-6.

Dans cet organigramme on considère un lien de communication générique identifié de manière générale par un triplet (SENS, A, B), dit premier triplet, ayant pour composants un premier sens « SENS » du lien de communication, un premier module électrique « A », et un deuxième module électrique « B ». Le deuxième module « B » correspond à un module esclave « Si » si le premier module « A » est un module maître« M » et réciproquement.

Cet organigramme utilise certains paramètres comportant le premier sens « SENS » de la communication, le sens opposé « SENSINVERSE » du premier sens, et des première et deuxième valeurs de réglage « j » et « k » de niveaux d'énergie. Les valeurs courantes de j et k sont soit des pourcentages entre 0% et 100% du maximum d'intensité avec par exemple un pas de comptage de 10%, soit des valeurs entre 0 et 1, par pas de 0,1.

On utilise aussi d'autres paramètres ou variables comprenant un compteur d'essai de communication «Essai» relatif au premier triplet, un indicateur de modification «Précédente_ Modification», des première et deuxième matrices de premières et deuxièmes valeurs de niveaux d'énergie consommée dans un sens et dans le sens opposé respectivement, ainsi qu'une troisième matrice dont les coefficients indiquent en binaire les couples (j,k) fonctionnels (i.e. les couples (j,k) qui garantissent une communication fonctionnelle entre le premier module A et le deuxième module B).

Plus particulièrement, les première et deuxième matrices sont utilisées pour mémoriser les énergies consommées (respectivement dans chaque sens de communication) et ont des dimensions qui correspondent aux valeurs respectives que peuvent prendre les valeurs de réglages j et k. Ainsi, par exemple, si j est réglé sur cinq valeurs et k est réglé sur quatre valeurs, chacune des deux première et deuxième matrices est de dimension 5x4 (i.e. cinq lignes et quatre colonnes, j et k étant les indices de chacune des matrices), il en est de même pour la troisième matrice.

L'étape E0 est une initialisation de certaines variables comportant :
- Essa i=1,
- Précédente_Modification=Diminuer_j
- matrice des couples (j,k) fonctionnels=[[0]],
- matrice Energie_Sens_A_B= [[0]]
- matrice Energie_SensInverse_B_A =[[0]].

A l'étape E1, on règle la première valeur de réglage du niveau d'énergie j relative au premier triplet (SENS, A, B) à son maximum (i.e. j=1). Les étapes suivantes ont pour but de diminuer cette première valeur du niveau de réglage d'énergie j de façon à garantir que le lien de communication défini par le premier triplet (SENS, A, B) soit fait de manière à consommer le moins d'énergie possible, tout en restant en accord avec le choix de stratégie énergétique retenu.

A l'étape E2, on définit un deuxième triplet (SENSINVERSE, B, A) ayant pour premier composant un deuxième sens « SENSINVERSE » du lien de communication opposé audit premier sens « SENS », pour deuxième composant le deuxième module électrique B, et pour troisième composant le premier module électrique A. La deuxième valeur de réglage du niveau d'énergie k relative au deuxième triplet est réglée à sa valeur courante de préréglage (Presetting).

Cette valeur de préréglage correspond soit à la valeur maximale de k (i.e. k=1), soit à un réglage établi précédemment par l'organigramme générique.

En effet, à chacune des étapes globales G1-G4 du procédé des Figs. 2A-2E, on ne considère qu'un seul sens de communication. Le sens opposé est soit à son niveau maximal car il n'a pas été réglé encore, soit il a déjà été réglé dans une grande étape (G1-G4) précédente.

Aux étapes E3-E8 on contrôle de manière itérative l'état de fonctionnement du lien de communication en fonction des première et deuxième valeurs courantes de réglage de niveaux d'énergie j et k en décrémentant à chaque itération (par pas de 0,1) un compteur associé à la première valeur courante de réglage j relative au premier triplet (SENS, A, B). Bien entendu, le compteur est initialisé à la valeur maximale de la première valeur de réglage j du niveau d'énergie telle que définie à l'étape E1 (i.e., j=1).

Plus particulièrement, à l'étape E3, on envoie un message de « Test de Communication » selon le SENS de communication entre le premier module A et le deuxième module B selon le premier triplet (SENS, A, B). Par exemple, si SENS=Tx, le premier module A va transmettre un message vers le deuxième module B, composé d'une succession de bits aléatoires, par exemple {1001011010}.

A l'étape E4, on teste si la communication selon le SENS du premier module A au deuxième module B est réussie ou non. Dans l'exemple précédent, la transmission Tx de A vers B du message est validée par l'accusation d'une réception Rx de B à partir de A en communiquant par exemple la trame complémentaire à celle générée aléatoirement à l'étape E3 (i.e. {0110100101} selon l'exemple de l'étape E3). Si la communication relative au premier triplet (SENS, A, B) a échouée, on entre dans un sous-processus E10 qui va analyser la cause de l'échec. Sinon, c'est-à-dire si la communication est réussie, on poursuit à l'étape suivante E5.

A l'étape E5, les première et deuxième valeurs courantes de réglages j et k des niveaux d'énergie sont considérées fonctionnelles. On sauvegarde alors la première valeur courante de réglage j du niveau d'énergie relative au premier triplet (SENS, A, B) ainsi que la deuxième valeur courante de réglage k du niveau d'énergie relative au deuxième triplet (SENSINVERSE, B, A).

En effet, à l'étape E5 on considère que les étapes E3 et E4 sont toutes les deux réussies. Cela signifie que le couple (j,k) de première et deuxième valeurs courantes de réglage de niveaux d'énergie entre les modules A et B permet d'assurer cette communication. On sauvegarde alors dans la première matrice la valeur de l'intensité du courant consommé en étape E3, représentant le niveau d'énergie requis lors de la communication associée au premier triplet (SENS, A, B), à la ligne et colonne correspondant respectivement au couple (j, k). Par exemple, un couple (j, k)=(0,3 ; 0,5) correspond aux coordonnées (3, 5) de la première matrice. Dans la deuxième matrice, on sauvegarde la valeur de l'intensité du courant consommé en étape E4, représentant le niveau d'énergie requis lors de la communication associée au deuxième triplet (SENSINVERSE, B, A), à la ligne et colonne correspondant respectivement au couple (j, k).

A l'étape E6, on sauvegarde comme élément d'indice (j, k) de la troisième matrice le fait que le couple de valeurs de réglage (j,k) de niveaux d'énergie est fonctionnel (i.e. (j,k)=1) relativement au premier triplet (SENS, A, B). Ce couple de réglage fonctionnel indique les niveaux d'énergie qui permettent d'assurer la communication entre les premier et deuxième modules. Ainsi, de manière itérative, cette étape permet de sauvegarder un ensemble de couples de réglages (j, k) fonctionnels relatif au premier triplet (SENS, A, B).

L'étape E7 consiste à faire deux vérifications. A la première vérification, on teste si la précédente modification de réglage a consisté à diminuer la première valeur courante de réglage j (i.e. Précédente_ Modification=Diminuer j), afin de voir s'il est justifié de continuer à diminuer cette valeur pour essayer de moins consommer. La deuxième vérification consiste à vérifier que la première valeur courante de réglage j n'est pas à son minimum (si j est à son minimum, diminuer encore sa valeur reviendrait à éteindre la communication relativement au premier triplet (SENS, A, B)). Si ce n'est pas le cas (i.e. si les première et deuxième vérifications sont toutes les deux négatives), cela signifie qu'on a atteint une configuration de réglage nécessaire et suffisante pour assurer la communication tout en minimisant sa consommation, et on entre alors dans un sous-processus E20 de sauvegarde de la configuration. Sinon, on poursuit à l'étape suivante E8.

A l'étape E8, on décrémente la première valeur courante de réglage j relative au premier triplet (SENS, A, B) d'un pas de 0,1 et on retourne à l'étape E3. On conserve l'indication que la précédente modification de réglage a consisté à diminuer la première valeur courante de réglage j (i.e. Précédente_Modification=Diminuer_j).

La Fig. 4 est un organigramme illustrant les étapes d'un sous-processus d'analyse de défaillance d'une communication, selon un mode de réalisation préféré de l'invention.

Ce sous-processus intervient lorsqu'à l'étape E4 de la Fig. 3, la communication a été diagnostiquée comme défaillante. Le but du sous-processus est d'analyser la raison de l'échec et de proposer les différentes actions curatives envisageables.

L'étape E10 est l'entrée dans le sous-processus d'analyse lors de l'échec d'une communication à l'issue de l'étape E3.

A l'étape E11, on teste si la communication a échoué parce que la deuxième valeur de réglage du niveau d'énergie k relative au deuxième triplet (SENSINVERSE, B, A) n'était pas à son niveau maximum. (Autrement dit, on teste si la communication a été considérée comme infructueuse parce que la communication retour ne s'est pas faite faute d'un réglage suffisant). Si c'est le cas, c'est-à-dire, si la communication retour n'était pas à son niveau maximum, on entre dans un sous-processus E30 d'analyse de l'échec en fonction de la stratégie sélectionnée. Sinon, on va à l'étape suivante E12.

A l'étape E12, la deuxième valeur de réglage du niveau d'énergie k relative au deuxième triplet (i.e. la communication retour) étant réglée à son maximum, on teste si la première valeur de réglage du niveau d'énergie j relative au premier triplet (i.e. la communication aller) était elle aussi à son niveau maximum lors de l'échec. Si c'est le cas on va à l'étape E13, sinon, on va à l'étape E16.

L'étape E13 concerne le cas peu probable où la communication a échoué malgré le fait que les première j et deuxième k valeurs de réglages du niveau d'énergie étaient à leur maximum respectif. A priori, les communications entre les premier et deuxième modules dans les deux sens doivent normalement fonctionner lorsque les valeurs j et k sont à leur niveau d'énergie maximal. L'échec peut éventuellement être dû à une perturbation lors de la tentative de communication et on fait alors un nombre prédéterminé m (par exemple m=3) d'essais itératifs pour vérifier si c'est le cas. Plus particulièrement, on vérifie à cette étape E13 le nombre d'essais qui ont déjà été tentés, en tolérant m-1 essais ratés consécutifs. S'il y a eu m échecs consécutifs, on passe à l'étape E15, sinon on passe à l'étape E14.

A l'étape E14, on incrémente le compteur de nombre d'essais « Essai » relatif au premier triplet (SENS, A, B) et on retourne à l'étape E3 de l'organigramme de la Fig. 3 pour recommencer les tests de communication.

A l'étape E15 le processus de comptage de nombre d'essais s'arrête car m tentatives de communication (relatives au premier triplet (SENS, A, B) avec les première et deuxième valeurs de réglages j et k au maximum) ont échoué. Dans ce cas, l'opérateur peut alors être invité à vérifier l'installation pour rechercher l'origine de la perturbation et redémarrer le processus général.

Par ailleurs, à l'étape E16, la communication a échoué alors que la deuxième valeur de réglage k du niveau d'énergie relative au deuxième triplet (SENSINVERSE, B, A) était au maximum, mais pas la première valeur de réglage j du niveau d'énergie relative au premier triplet (SENS, A, B). On incrémente alors la première valeur courante de réglage j. On mémorise que la modification précédente a consisté à « augmenter_j », et on retourne à l'étape E3 de l'organigramme de la Fig. 3 pour recommencer les tests de communication.

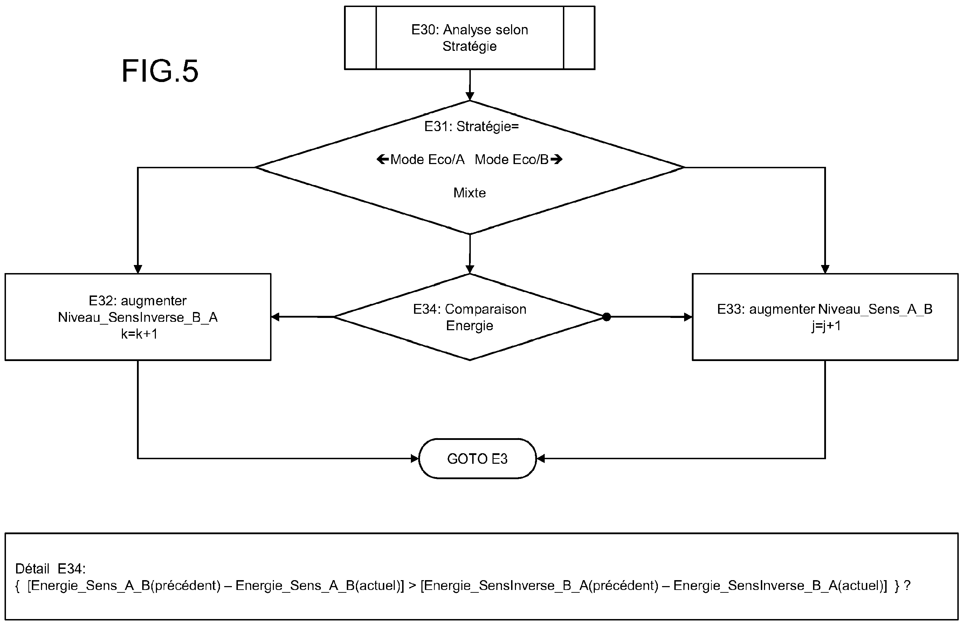

La Fig. 5 est un organigramme illustrant les étapes d'un sous-processus d'analyse et d'actions à prendre selon la stratégie sélectionnée après l'échec d'une communication, selon un mode de réalisation préféré de l'invention.

Ce sous-processus intervient lorsqu'à l'étape E4 de la Fig. 3, la communication a échoué alors que la deuxième valeur de réglage du niveau d'énergie k relative au deuxième triplet (SENSINVERSE, B, A) n'était pas à son niveau maximum (voir l'étape E11 de la Fig. 4).

L'étape E30 est une entrée dans le sous-processus d'analyse selon la stratégie à partir de l'étape E11 de la Fig. 4.

Supposons à titre d'exemple qu'on a eu un échec de communication relatif à un lien de communication défini par le triplet (Tx, A, B) avec un couple (j, k)=(0,3 ; 0,5). C'est-à-dire, qu'on a eu un échec avec 30% du niveau maximal pour la transmission de A vers B et 50% du niveau maximal pour la réception de B vers A.

A l'étape E31, on teste si la stratégie sélectionnée vise à optimiser la consommation du premier module A, auquel cas on passe à l'étape E32, ou à optimiser la consommation du deuxième module B, auquel cas on passe à l'étape E33, ou s'il s'agit d'une stratégie mixte sur les premier et deuxième modules A et B, auquel cas on passe à l'étape E34.

A l'étape E32, étant donné que la stratégie retenue préfère économiser la consommation du premier module A, on incrémente alors la deuxième valeur de réglage k du niveau d'énergie relative au deuxième triplet (SENSINVERSE, B, A). Selon l'exemple décrit ci-dessus à l'étape E31, le couple (j, k) devient (0,3 ; 0,6), c'est-à-dire, qu'on augmente le niveau de réception du deuxième module B à 60% du niveau maximal tout en maintenant à 30% la transmission du premier module A vers le deuxième module B.

A l'étape E33, étant donné que la stratégie retenue préfère économiser la consommation du deuxième module B, on incrémente alors la première valeur de réglage j du niveau d'énergie relative au premier triplet (SENS, A, B). On mémorise alors que la modification précédente a consisté à «augmenter_j », puis on retourne à l'étape E3 de l'organigramme de la Fig. 3 pour recommencer les tests de communication.

Dans ce cas et selon l'exemple décrit à l'étape E31, le couple (j, k) devient (0,4; 0,5), c'est-à-dire, qu'on augmente le niveau de transmission de A vers B à 40% du niveau maximal tout en maintenant à 50% la réception du deuxième module B. En effet, le deuxième module B peut être un module esclave alimenté par une petite batterie qu'on préfère préserver.

L'étape E34 est un test pour vérifier ce qui est le moins énergivore dans le cas d'une stratégie mixte.

Autrement dit, on vérifie s'il faut revenir au précédent réglage fonctionnel pour incrémenter la première valeur de réglage j ou pour incrémenter la deuxième valeur de réglage k. Ainsi, on cherche à identifier quel est le plus pénalisant globalement entre ces deux alternatives afin de choisir celle qui est le moins énergivore. En particulier, on compare la différence de l'énergie consommée lors des deux dernières itérations (précédente et courante) relatives au premier triplet (SENS, A, B) à la différence de l'énergie consommée lors des deux dernières itérations relatives au deuxième triplet (SENSINVERSE, B, A). Selon le cas le plus avantageux, on passe alors à l'étape E32 ou à l'étape E33.

Selon l'exemple décrit à l'étape E31, le circuit de traitement est configuré pour comparer (par exemple, selon des abaques prévues ou en requérant les mesures des intensités de courant débitées) les consommations de (j, k)=(0,3 ; 0,6) et (j, k)=(0,4 ; 0,5) afin de sélectionner la consommation la plus faible.

La Fig. 6 est un organigramme illustrant les étapes d'un sous-processus de sauvegarde d'une configuration de consommation énergétique selon plusieurs stratégies, selon un mode de réalisation préféré de l'invention.

Ce sous-processus vise à retenir le couple (j,k) optimal en fonction d'une stratégie sélectionnée après qu'on a déterminé l'ensemble des couples de réglages (j, k) fonctionnels relatif au premier triplet (SENS, A, B) à l'étape E6 de la Fig. 3.

En effet, l'étape E20 est une entrée dans ce sous-processus de sauvegarde à partir de l'étape E7 de la Fig.3.

A l'étape E21, on teste si la stratégie vise à optimiser la consommation du premier module A, auquel cas on passe à l'étape E22, ou à optimiser la consommation du deuxième module B, auquel cas on passe à l'étape E23, ou s'il s'agit d'une stratégie mixte sur les premier et deuxième modules A et B, auquel cas on passe à l'étape E24.

A l'étape E22, comme la stratégie retenue est d'économiser la consommation du premier module A, on recherche alors parmi les couples fonctionnels (j,k) celui qui possède la plus petite valeur de réglage j, que l'on sauvegarde dans les moyens de stockage comme étant la configuration (SETTING) optimale. Ceci termine le processus générique pour le premier triplet (SENS, A, B).

A l'étape E23, comme la stratégie retenue est d'économiser la consommation du deuxième module B, on recherche alors parmi les couples fonctionnels (j,k) celui qui possède la plus petite valeur de réglage k, que l'on sauvegarde dans les moyens de stockage comme étant la configuration optimale. Ceci termine le processus générique pour le premier triplet (SENS, A, B).

L'étape E24 concerne le cas d'une stratégie mixte. On retient alors ce qui est le moins énergivore, en recherchant parmi les couples (j,k) fonctionnels ceux qui minimisent la somme des consommations énergétiques relatives aux premier triplet (SENS, A, B) et deuxième triplet(SENSINVERSE, B, A). Autrement dit, l'unité de traitement 9 calcule le minimum de la somme des énergies consommées dans le premier « SENS » entre les modules A et B et dans le sens opposé « SENSINVERSE » entre les modules B et A. On a alors terminé le processus générique pour le premier triplet (SENS, A, B).

Une fois que tous les modules électriques (module maître M et modules esclaves S1, ... Sn) d'une architecture sont passés par le processus global, l'utilisateur connait alors la configuration de communication optimale à consommation énergétique minimale. Il peut alors choisir d'exploiter son architecture dans cette configuration minimale en permanence, ou alors de n'y recourir que dans certains cas critiques.

Selon un mode de réalisation de l'invention, les modules électriques sont configurés pour fonctionner la plupart du temps selon un mode de fonctionnement « normal » en faisant abstraction de la contrainte de consommation énergétique et pour ne basculer en mode « optimal » qu'en situation « critique » ou dégradée. En mode « normal », les modules maître et esclaves ont leurs niveaux de transmission et de réception respectifs réglés à leur maximum. En revanche en mode « optimal », les modules maître et esclaves ont leurs niveaux de transmission et de réception respectifs réglés à leur strict minimum.

Ceci permet de réduire les consommations énergétiques relatives aux communications lorsque cela est jugé nécessaire. Ceci peut correspondre par exemple à une situation où l'infrastructure électrique est contrainte en énergie. Par exemple lors d'une panne électrique (blackout), les modules électriques sont configurés pour fonctionner sur un groupe auxiliaire ou sur leurs propres batteries. Toutefois, ne connaissant pas à l'avance la durée de l'événement, il peut être judicieux de chercher à économiser les ressources énergétiques de l'infrastructure électrique, en limitant ses niveaux de communication entre les modules au strict nécessaire. Ceci peut être réalisé en basculant temporairement les niveaux de transmission et de réception du module maître et des modules esclaves aux niveaux minimaux, en attendant la fin de la panne pour revenir à une exploitation normale.

Par ailleurs, il peut être avantageux de mener certaines actions au sein de l'infrastructure électrique de manière prioritaire. Par exemple, l'ouverture ou la fermeture d'un interrupteur du réseau électrique pour procéder à une reconfiguration du réseau ou à l'isolation d'une section en défaut (passage d'ordre sur le réseau) est une action prioritaire par rapport à un échange de données de surveillance entre équipements, qui pourra être mené de manière différée. Or pour garantir de bien mener ces actions, il est préférable de garantir la bonne fourniture d'énergie à ces actions prioritaires, et donc de minimiser les consommations de communications non prioritaires selon le procédé de contrôle de l'invention. Ceci peut être mené en exploitant le procédé de contrôle le temps nécessaire au bon déroulement de ces actions, avant de revenir à une exploitation normale.

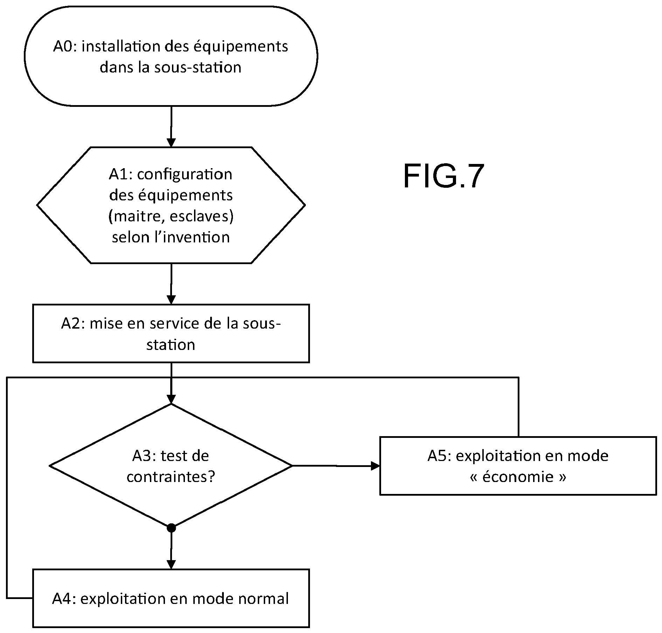

En effet, la Fig. 7 est un organigramme illustrant les étapes d'un processus de contrôle de la consommation énergétique dans des situations critiques, selon un mode de réalisation préféré de l'invention.

A l'étape A0, les modules électriques (module maître et modules esclaves) dans l'infrastructure électrique (sous-station ou ensemble de sous-stations) sont initialisés.

L'étape A1 consiste à préparer la configuration optimale de transmission et réception pour les différents modules selon les processus des Figs. 2A à 6.

L'étape A2 concerne la mise en service effective de l'infrastructure électrique.

L'étape A3 est un test de contraintes. En effet, on teste à ce niveau s'il existe une contrainte (interruption momentanée de l'infrastructure électrique de type blackout, requête de passage d'ordre prioritaire, etc.) nécessitant de passer les communications en mode « économie » d'énergie.

A l'étape A4, s'il n'existe pas ou plus de contrainte spécifique, on reste ou on revient en mode d'exploitation « normal », avec les niveaux de communication (transmission et réception) des modules (maître et esclaves) à leur maximum respectif.

En revanche à l'étape A5, s'il existe ou persiste une contrainte spécifique, on bascule ou on reste dans un mode d'exploitation dit « économie », où les niveaux de communication (transmission et réception) des modules (maître et esclaves) sont réglés selon la configuration optimale déterminée à l'étape A1.

Avantageusement, le circuit de traitement est configuré pour faire basculer le module maître et les modules esclaves en mode « optimal » à la réception d'un signal de déclenchement généré par un événement critique prédéterminé. Le basculement dans l'autre sens peut être déclenché à la fin de l'événement critique.

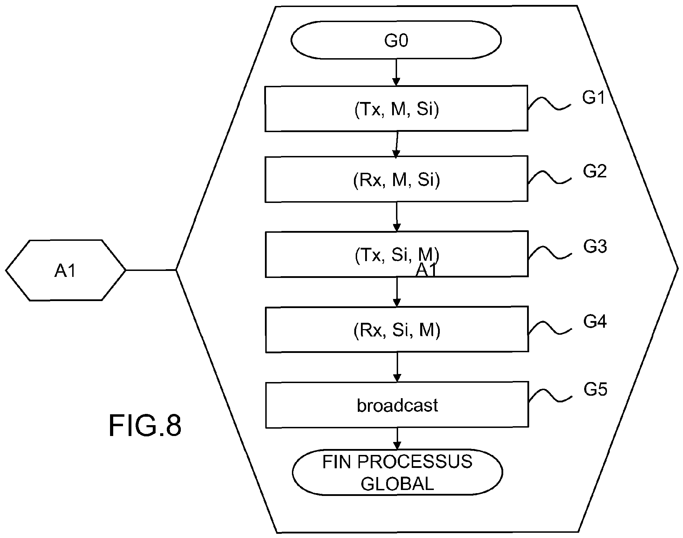

La Fig. 8 représente de manière schématique les étapes globales d'un procédé de contrôle de la consommation énergétique de communications entre modules électriques en mode de diffusion, selon un autre mode de réalisation préféré de l'invention.

Les étapes G1 à G4 sont identiques à celles des Figs. 2A-2E et permettent ainsi de déterminer la configuration de communication à consommation énergétique minimale. Chacune des étapes G1 à G4 permet pour chaque triplet désigné de déterminer sa configuration de communication à consommation minimale en appliquant le processus générique décrit par les Figs. 3 à 6.

L'étape G5 est optionnelle et peut être mise en oeuvre en cas de contrôle de la consommation énergétique des communications entre modules électriques en mode diffusion (*broadcast*). Dans ce cas, on sélectionne parmi des couples fonctionnels associés aux liens de communication, le maximum du niveau de transmission du maître vers chacun des esclaves, ainsi que le niveau maximum de réception de maître depuis chacun des esclaves. En effet, une fois qu'on a déterminé dans les étapes G1 à G4, les niveaux d'énergie fonctionnels de réception de chaque module esclave ainsi que le niveau d'énergie fonctionnel de transmission du module maître, on peut facilement sélectionner un unique couple fonctionnel qui permet de régler le module maître ainsi que tous les modules esclaves de manière générale et non plus individuelle.

Dans le cas où seul le module maître a des possibilités de réglage, les étapes G3 et G4 peuvent être supprimées. En contraste, dans le cas où seuls les modules esclaves ont des possibilités de réglage, les étapes G1 et G2 peuvent être supprimées.

## Revendications

1. Procédé de contrôle de consommation énergétique de communications entre des noeuds d'un réseau de communication intra-sous-station ou inter-sous-stations d'une infrastructure électrique, les noeuds d'un réseau de communication (7) intra-sous-station étant formés par des équipements électriques à l'intérieur de la sous-station (135), les noeuds d'un réseau de communication (107) inter-sous-stations étant formés par les sous-stations (130-135) elles-mêmes, un noeud appartenant à un réseau de communication (7) intra-sous-station ou à un réseau de communication (107) inter-sous-stations étant appelé module électrique (30-34), **caractérisé en ce qu'**il comporte les étapes suivantes :
- définir un réseau de communication (7 ; 107) étoilé en partitionnant les modules électriques entre un module central dit module maître (M ; 30), et un ensemble de modules esclaves (S1-Sn ; 31-34), le module maître étant configuré pour être relié aux modules esclaves par des liens de communications non filaire en mode étoilé, et
- réglage des niveaux d'énergie de liens de communications au moins dans un sens de réception (Rx) par le module maître (M ; 30) à partir d'au moins un module esclave (S1-Sn ; 31-34) ou par au moins un module esclave depuis le module maître, ledit réglage des niveaux d'énergie étant réalisé selon un processus générique modélisant les liens de communications.

2. Procédé selon la revendication 1, **caractérisé en ce qu'**il comporte en outre un réglage des niveaux d'énergie des liens de communications dans un sens de transmission (Tx) du module maître vers au moins un module esclave ou d'au moins un module esclave vers le module maître.

3. Procédé selon la revendication 3, **caractérisé en ce qu'**il comporte les étapes suivantes :
- réglage des niveaux d'énergie dans le sens de transmission du module maître (M) vers chaque module esclave (Si),
- réglage des niveaux d'énergie dans le sens de réception du module maître (M) à partir de chaque module esclave (Si),
- réglage des niveaux d'énergie dans le sens de transmission de chaque module esclave (Si) vers le module maître (M), et
- réglage des niveaux d'énergie dans le sens de réception de chaque module esclave (Si) à partir du module maître (M).

4. Procédé selon l'une quelconque des revendications précédentes, **caractérisé en ce qu'**il comporte une modélisation des liens de communications par des triplets ordonnés constitués chacun d'un premier composant indiquant le sens du lien de communication, et de deuxième et troisième composants indiquant les extrémités de départ et d'arrivée du lien de communication dans l'ordre ou dans l'ordre inversé selon que le sens de communication attribué par le premier composant est respectivement une transmission ou une réception.

5. Procédé selon la revendication 4, **caractérisé en ce que** le réglage du niveau d'énergie d'un lien de communication générique identifié par un premier triplet ayant pour composants un premier sens du lien de communication, un premier module électrique, et un deuxième module électrique, est réalisé selon un processus générique comportant les étapes suivantes :
- définir un deuxième triplet ayant pour premier composant un deuxième sens du lien de communication opposé audit premier sens, pour deuxième composant ledit deuxième module électrique, et pour troisième composant ledit premier module électrique,
- tester de manière itérative un état de fonctionnement du lien de communication en fonction des première et deuxième valeurs courantes de réglage de niveaux d'énergie relatives respectivement auxdits premier et deuxième triplets en décrémentant à chaque itération un compteur associé à la valeur courante de réglage relative au premier triplet, ledit compteur étant initialisé à une valeur maximale du niveau d'énergie,
- sauvegarder des première et deuxième valeurs courantes de réglage de niveaux d'énergie fonctionnelles,
- sauvegarder un ensemble de couples de réglages fonctionnels relatif au premier triplet (SENS, A, B), chaque couple courant de réglage fonctionnel étant composé desdites première et deuxième valeurs courantes de réglage de niveaux d'énergie fonctionnelles.

6. Procédé selon la revendication 5, **caractérisé en ce qu'**il comporte une sauvegarde d'une configuration de consommation énergétique selon une stratégie visant à optimiser la consommation énergétique du premier module ou du deuxième module ou le moins énergivore desdits premier et deuxième modules.

7. Procédé selon la revendication 5, **caractérisé en ce qu'**il comporte une analyse de défaillance d'une communication lors d'un échec de fonctionnement du lien de communication.

8. Procédé selon l'une quelconque des revendications 5 à 7, **caractérisé en ce qu'**il comporte un réglage en mode diffusion comprenant une sélection parmi des couples fonctionnels associés aux liens de communications, d'un niveau maximum de transmission du module maître vers chacun des modules esclaves ainsi que d'un niveau maximum de réception du module maître depuis chacun des modules esclaves.

9. Procédé selon l'une quelconque des revendications précédentes, **caractérisé en ce que** le contrôle de consommation énergétique dudit module maître et desdits modules esclaves est mis en oeuvre après un événement prédéterminé ou lors d'une situation critique.

10. Système de contrôle de consommation énergétique de communications entre des noeuds d'un réseau de communication intra-sous-station ou inter-sous-stations d'une infrastructure électrique, les noeuds d'un réseau de communication (7) intra-sous-station étant formés par des équipements électriques à l'intérieur de la sous-station (135), les noeuds d'un réseau de communication (107) inter-sous-stations étant formés par les sous-stations (130-135) elles-mêmes, un noeud appartenant à un réseau de communication (7) intra-sous-station ou à un réseau de communication (107) inter-sous-stations étant appelé module électrique (30-34), **caractérisé en ce qu'**il comporte :
- un réseau de communication (7 ;107) étoilé entre un module central dit module maître (30 ; 130), et un ensemble de modules esclaves (31-34 ; 131-135), le module maître étant configuré pour être relié aux modules esclaves par des liens de communications non filaires en mode étoilé, et
- circuit de traitement (9, 109) configuré pour mettre en oeuvre le procédé de contrôle selon l'une quelconque des revendications précédentes.

11. Système selon la revendication 10, **caractérisé en ce que** le réseau de communication étoilé est un réseau interne (7) formé par des équipements au sein d'une même sous-station (135) parmi lesquels un équipement central est configuré pour jouer le rôle du module maître (30) tandis que les autres équipements sont configurés pour jouer les rôles des modules esclaves (31-34).

12. Système selon la revendication 10, **caractérisé en ce que** le réseau de communications étoilé est un réseau externe (107) formé par un ensemble de sous-stations électriques parmi lesquels une sous-station centrale, dite centre de conduite, est configurée pour jouer le rôle du module maître (130) tandis que les autres sous-stations sont configurées pour jouer les rôles des modules esclaves (131-135).

13. Infrastructure électrique comportant le système selon l'une quelconque des revendications 10 à 12.
